# FASCICULE DE BREVET EUROPEEN

(11) **EP 4 127 442 B1**
(45) Date de publication et mention de la délivrance du brevet: **11.12.2024**
(21) Numéro de dépôt: 21716502.6
(22) Date de dépôt: 19.03.2021
(51) Int. Cl.: F02K 3/115, F02C 7/14

(54) **ÉCHANGEUR DE CHALEUR AIR-HUILE RÉTRACTABLE POUR ENSEMBLE PROPULSIF D'AÉRONEF**
EINZIEHBARER LUFT-ÖL-WÄRMETAUSCHER FÜR FLUGZEUGANTRIEBSANORDNUNG
RETRACTABLE AIR-OIL HEAT EXCHANGER FOR AIRCRAFT PROPULSION ASSEMBLY

(30) Priorité: 30.03.2020 FR 2003148
(43) Date de publication de la demande: 08.02.2023
(73) Titulaire: SAFRAN AIRCRAFT ENGINES, 75015 Paris (FR)
(72) Inventeur: COUILLEAUX, Alexandre Gérard François, 77550 MOISSY-CRAMAYEL (FR); LASNE, Mathieu, 77550 MOISSY-CRAMAYEL (FR)
(74) Mandataire: Brevalex
(86) Numéro de dépôt international: PCT/FR2021/050459
(87) Numéro de publication internationale: WO 2021/198581

(56) Documents cités:
- EP-A1- 3 012 443
- US-A- 2 249 948
- US-B2- 8 534 043
- US-B2- 8 776 952

## Description

### Domaine technique

L'invention se rapporte au domaine des ensembles propulsifs d'aéronef à double flux. L'invention se rapporte plus spécifiquement à un échangeur de chaleur destiné à refroidir un fluide chaud, tel que de l'huile circulant dans un circuit de lubrification de l'ensemble propulsif, avec de l'air froid d'un flux secondaire de l'ensemble propulsif.

### État de la technique antérieure

Le document EP 2 336 525 A1 décrit un échangeur de chaleur du type air-huile connu sous la dénomination « ACOC », de l'anglais « Air Cooled Oil Cooler ». Cet échangeur s'étend radialement dans une veine secondaire de l'ensemble propulsif de manière à être traversé par le flux secondaire d'air froid et refroidir ainsi de l'huile utilisée pour lubrifier des pièces du moteur de cet ensemble propulsif.

Un tel échangeur forme une discontinuité aérodynamique dans la veine secondaire, ce qui entraîne des pertes de charge singulières dans toutes les phases de vol.

Le document US 2017/0159490 A1 décrit un échangeur de chaleur logé dans une structure interne de nacelle qui comprend un système d'écope prévu pour acheminer une fraction du flux secondaire vers l'échangeur.

Un tel système à écope permet de réduire les pertes de charge singulières en phase de décollage mais génère toutefois des pertes de charge singulières significatives en phase de croisière. Les documents US8534043B2 et US8776952B2 divulguent d'autres échangeurs de chaleur selon l'état de la technique.

### Exposé de l'invention

L'invention vise à procurer une nacelle d'ensemble propulsif ayant un échangeur capable de refroidir efficacement un fluide à l'aide du flux secondaire tout en limitant les pertes de charge singulières.

A cet effet, l'invention a pour objet une nacelle pour ensemble propulsif d'aéronef à double flux, comprenant une structure interne, une structure externe et un échangeur de chaleur, la structure interne et la structure externe délimitant radialement entre elles un conduit d'écoulement d'un premier fluide destiné à former un flux secondaire, l'échangeur comprenant un capot extérieur et un module de transfert, le module de transfert comportant un circuit de circulation d'un deuxième fluide, l'échangeur étant relié à l'une parmi la structure interne et la structure externe de manière à pouvoir transmettre de la chaleur du deuxième fluide au premier fluide.

Selon l'invention, cette nacelle comprend un actionneur configuré pour déplacer le capot extérieur et le module de transfert de l'échangeur entre :
- une position rétractée dans laquelle le module de transfert est reçu dans un logement de la structure interne ou externe à laquelle l'échangeur est relié et dans laquelle le capot extérieur obture une ouverture de ce logement de manière à reconstituer une surface de délimitation du conduit d'écoulement,
- une position déployée dans laquelle le module de transfert s'étend dans le conduit d'écoulement de manière à pouvoir être traversé par une fraction du flux secondaire et transmettre ainsi de la chaleur du deuxième fluide au premier fluide.

Une telle nacelle permet d'exposer le module de transfert de l'échangeur au premier fluide lorsqu'il existe un besoin de refroidissement du deuxième fluide et uniquement dans ce cas.

Lorsqu'un tel refroidissement n'est pas nécessaire, sa rétractation permet de limiter voire d'annuler les pertes de charges singulières qu'il est susceptible de générer. La réduction ou annulation des pertes de charge singulières résulte d'une part de la rétraction en tant que telle de l'échangeur et d'autre part de la géométrie du capot extérieur puisque celui-ci est conçu pour reconstituer la surface de délimitation du conduit d'écoulement.

Autrement dit, en position rétractée, l'échangeur est agencé pour éviter la création d'un accident de forme dans le conduit d'écoulement susceptible de perturber le flux secondaire circulant dans ce conduit.

La continuité aérodynamique du conduit d'écoulement résulte plus particulièrement du fait que le capot extérieur reconstitue la surface de délimitation du conduit d'écoulement, c'est-à-dire du fait que ce capot extérieur affleure les parties de ladite surface de délimitation adjacentes à la partie de cette surface qui est constituée par le capot extérieur lui-même. Une telle configuration du capot extérieur permet notamment de limiter ou d'empêcher l'introduction d'une partie du premier fluide dans le logement du module de transfert.

Il en résulte une réduction significative des pertes de charge singulières et une amélioration globale des performances de l'ensemble propulsif dans toutes les phases de vol incluant les phases de décollage et de croisière.

De préférence, l'actionneur est configuré pour déplacer le capot extérieur et le module de transfert de l'échangeur entre la position rétractée et la position déployée par translation radiale.

Dans un mode de réalisation, l'échangeur comprend une paroi intérieure, le module de transfert s'étendant radialement entre la paroi intérieure et le capot extérieur, la paroi intérieure de l'échangeur étant configurée pour obturer ladite ouverture du logement de la structure interne ou externe à laquelle l'échangeur est relié de manière à reconstituer ladite surface de délimitation du conduit d'écoulement lorsque l'échangeur est en position déployée.

L'échangeuren position déployée introduit bien entendu une discontinuité aérodynamique au sein du conduit d'écoulement puisque le capot extérieur et le module de transfert s'étendent radialement dans le conduit d'écoulement.

Toutefois, les pertes de charge singulières qui en résultent sont réduites compte tenu de la configuration de la paroi intérieure qui, de la même manière que le capot extérieur en position déployée, affleure les parties adjacentes de la surface de délimitation et empêche ou limite l'introduction d'une partie du premier fluide dans le logement du module de transfert.

La géométrie du capot extérieur et/ou de la paroi intérieure de l'échangeur est de préférence configurée pour définir, avec la structure interne ou externe à laquelle l'échangeur est relié, une surface de délimitation du conduit d'écoulement présentant une courbure, au moins dans un plan longitudinal médian de la nacelle.

Ainsi, le capot extérieur de l'échangeur peut comprendre une surface présentant, dans un plan longitudinal médian, une courbure simple ou double.

De manière similaire, la paroi intérieure de l'échangeur peut comprendre une surface présentant, dans un plan longitudinal médian, une courbure simple ou double.

Dans un mode de réalisation, l'échangeur comprend un organe de raccordement du circuit de circulation du deuxième fluide, cet organe étant configuré pour raccorder ce circuit de circulation à un circuit de lubrification de l'ensemble propulsif.

La nacelle comprend de préférence un organe de détection et/ou d'évaluation d'au moins un paramètre tel que la température du deuxième fluide et un module de commande relié d'une part à cet organe et d'autre part à l'actionneur de manière à pouvoir déplacer le capot extérieur et le module de transfert en fonction de l'au moins un paramètre.

Dans un mode de réalisation, le capot extérieurde l'échangeur peut comprendre une cavité configurée pour faire circuler dans ce capot extérieur une partie dudit deuxième fluide.

La présence dans le capot extérieur d'une telle cavité permet d'augmenter la surface totale d'échange thermique.

Cette cavité peut par exemple être reliée audit circuit du module de transfert pour former avec celui-ci un circuit commun.

De préférence, la cavité du capot extérieur peut être configurée pour réaliser un échange thermique entre le premier et le deuxième fluide lorsque l'échangeur est en position rétractée.

L'invention couvre aussi un ensemble propulsif pour aéronef, cet ensemble propulsif comprenant une nacelle telle que définie ci-dessus, ainsi qu'un aéronef comprenant tel un ensemble propulsif.

L'invention a aussi pour objet un procédé de fabrication d'une nacelle telle que définie ci-dessus.

Selon l'invention, ce procédé comprend une étape de fabrication additive du capot extérieur de l'échangeur.

La fabrication additive du capot extérieur permet d'optimiser sa géométrie relativement à l'ouverture du logement du module de transfert de l'échangeur, de manière à réduire les discontinuités entre ce capot extérieur et la structure interne ou externe de la nacelle à laquelle l'échangeur est relié lorsque celui-ci est en position rétractée.

De préférence, ce procédé comprend aussi une étape de fabrication additive de la paroi intérieure de l'échangeur.

La fabrication additive de la paroi intérieure permet d'optimiser sa géométrie relativement à l'ouverture du logement du module de transfert de l'échangeur, de manière à réduire les discontinuités entre cette paroi intérieure et la structure interne ou externe de la nacelle à laquelle l'échangeur est relié lorsque celui-ci est en position déployée.

Bien entendu, l'invention couvre aussi un procédé de fabrication additive de tout ou partie de l'échangeur, incluant par exemple une étape de fabrication additive du capot extérieur, de la paroi intérieure et du module de transfert.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une demi-vue schématique en coupe axiale d'un ensemble propulsif d'aéronef conforme à un premier mode de réalisation de l'invention, comprenant un échangeur de chaleur relié à une structure interne de l'ensemble propulsif, l'échangeur étant en position rétractée ;
[Fig. 2] est une demi-vue schématique en coupe axiale de l'ensemble propulsif de la figure 1, l'échangeur de chaleur étant en position déployée ;
[Fig. 3] est une demi-vue schématique en coupe axiale d'un ensemble propulsif d'aéronef conforme à un deuxième mode de réalisation de l'invention, comprenant un échangeur de chaleur relié à une structure externe de l'ensemble propulsif, l'échangeur étant en position rétractée ;
[Fig. 4] est une demi-vue schématique en coupe axiale de l'ensemble propulsif de la figure 3, l'échangeur de chaleur étant en position déployée.

### Description détaillée de modes de réalisation

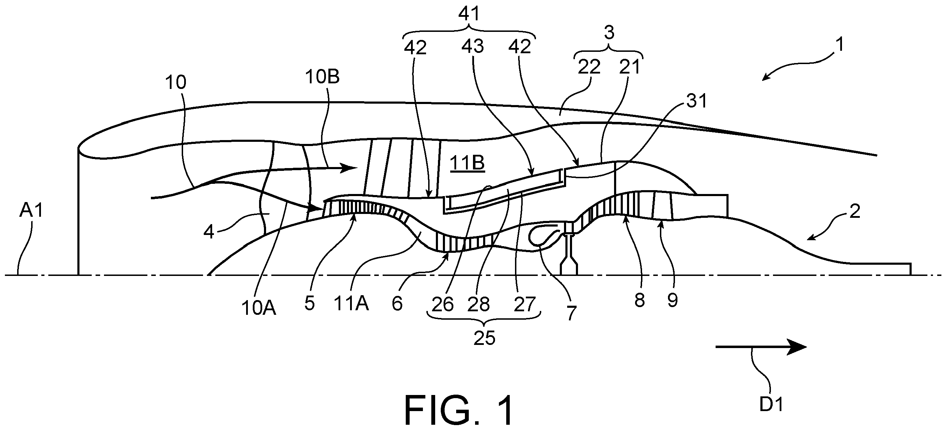

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux.

Par la suite, les termes « amont » et « aval » sont définis par rapport à un sens D1 d'écoulement des gaz à travers l'ensemble propulsif 1 lorsque celui-ci est propulsé.

Le turboréacteur 2 présente un axe central longitudinal A1 autour duquel s'étendent ses différents composants, en l'occurrence, de l'amont vers l'aval, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

Lors du fonctionnement du turboréacteur 2, un écoulement d'air 10 pénètre dans l'ensemble propulsif 1 par une entrée d'air en amont de la nacelle 3 et traverse la soufflante 4. En aval de la soufflante 4, une partie de cet écoulement d'air 10 pénètre au sein du générateur de gaz, dans un espace 11A appelé « veine primaire », de manière à former un flux primaire 10A traversant le générateur de gaz. Une autre partie de l'écoulement d'air 10 poursuit sa trajectoire dans un conduit 11B entourant le générateur de gaz de manière à former un flux secondaire 10B. Le conduit 11B est appelé « veine secondaire ».

La nacelle 3 comprend plus précisément une structure interne 21 formant un carénage interne du générateur de gaz et une structure externe 22 formant un carénage externe de l'ensemble propulsif 1. La structure interne 21 et la structure externe 22 de la nacelle 3 délimitent radialement entre elles ladite veine secondaire 11B.

Une telle architecture permet ainsi de générer un double flux comprenant d'une part le flux primaire 10A atteignant dans la veine primaire 11A une température relativement élevée et, d'autre part, le flux secondaire 10B dont la température reste relativement basse au sein de la veine secondaire 11B.

De manière connue en soi, le turboréacteur 2 comprend un circuit de lubrification (non représenté) dans lequel un fluide tel que de l'huile est mis en circulation afin de refroidir et/ou lubrifier des organes mécaniques (non représentés) du turboréacteur 2.

L'invention se rapporte plus spécifiquement à un échangeur de chaleur 25 permettant dans cet exemple de refroidir l'huile circulant dans le circuit de lubrification.

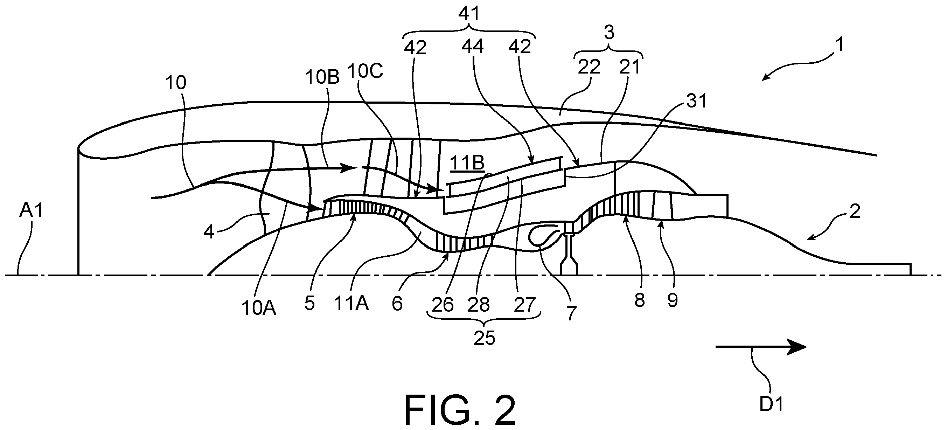

A défaut d'indication contraire, la description qui suit se rapporte au mode de réalisation des figures 1 et 2.

L'échangeur 25 est configuré pour pouvoir être placé dans une position rétractée, illustrée à la figure 1, ou dans une position déployée, illustrée à la figure 2.

De manière générale, l'échangeur 25 comprend un capot extérieur 26, une paroi intérieure 27 et un module de transfert 28 s'étendant radialement entre le capot extérieur 26 et la paroi intérieure 27.

Dans cet exemple, le capot extérieur 26 et la paroi intérieure 27 forment chacun une structure pleine présentant une surface continue.

Le module de transfert 28 comprend un circuit de circulation (non représenté) auquel est relié le circuit de lubrification du turboréacteur 2 de sorte que l'huile de refroidissement et/ou de lubrification, formant plus généralement un fluide caloporteur, circule dans le circuit du module de transfert 28.

Le branchement du circuit de circulation au circuit de lubrification est dans cet exemple réalisé par un organe de raccordement (non représenté) comprenant des tuyaux flexibles.

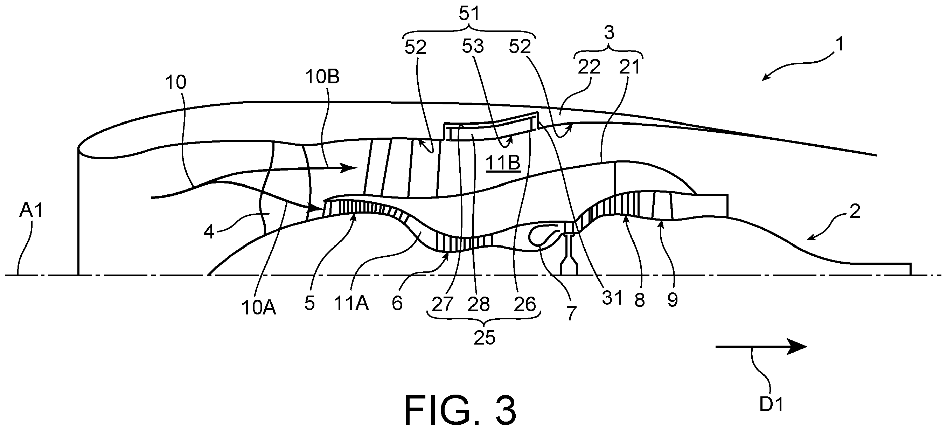

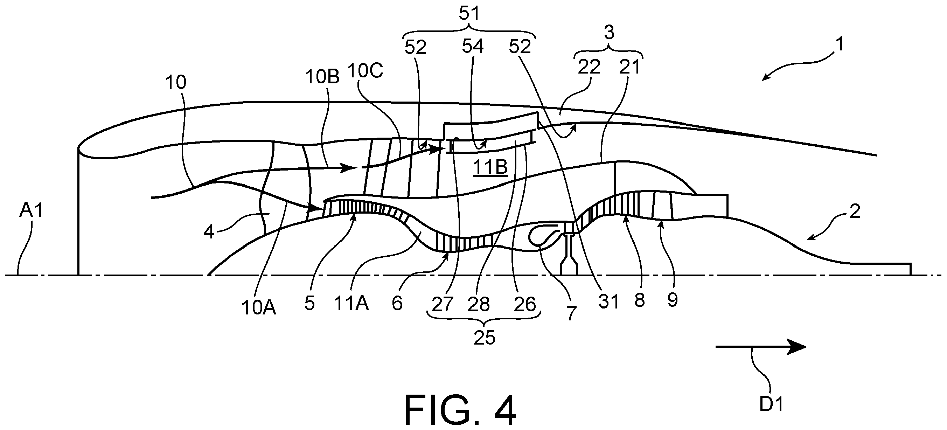

Dans cet exemple, l'échangeur 25 est relié à la structure interne 21 de la nacelle 3. Dans le mode de réalisation des figures 3 et 4, l'échangeur 25 est relié la structure externe 22.

L'ensemble propulsif 1 comprend un actionneur (non représenté) tel qu'un vérin configuré pour faire passer l'échangeur de la position rétractée (figure 1) à la position déployée (figure 2) et réciproquement.

La structure interne 21 comprend un logement 31 ayant une ouverture débouchant dans la veine secondaire 11B.

Dans la position rétractée de la figure 1, le module de transfert 28 est reçu dans le logement 31 de la structure interne 21 et le capot extérieur 26 obture l'ouverture du logement 31, empêchant ou limitant ainsi une introduction d'une partie du flux secondaire 10B au sein du logement 31.

En position rétractée, le capot extérieur 26 de l'échangeur 25 reconstitue une surface de délimitation 41 radialement interne de la veine secondaire 11B. Dans ces conditions, la surface de délimitation 41 est formée par une surface externe 42 de la structure interne 21 de la nacelle 3 et par une surface externe 43 du capot extérieur 26 de l'échangeur 25.

En position rétractée, la surface externe 42 de la structure interne 21 de la nacelle 3 et la surface externe 43 du capot extérieur 26 sont affleurantes.

L'échangeur 25 en position rétractée permet par conséquent de définir une veine secondaire 11B relativement lisse, tendant à ne produire aucune perte de charge singulière.

Dans la position déployée de la figure 2, le capot extérieur 26 ainsi que le module de transfert 28 de l'échangeur 25 s'étendent dans la veine secondaire 11B de sorte que le module de transfert 28 puisse être traversé par une fraction 10C du flux secondaire 10B.

La paroi intérieure 27 de l'échangeur 25 en position déployée obture l'ouverture du logement 31, empêchant ou limitant une introduction d'une partie du flux secondaire 10B au sein du logement 31.

Cette position permet de réaliser un échange thermique entre le flux secondaire 10B et le fluide caloporteur circulant dans le circuit du module de transfert 28, ce qui permet de refroidir ce fluide caloporteur.

L'échangeur 25 en position déployée remplit la fonction d'un échangeur air-liquide conventionnel, ou échangeur ACOC.

Dans cet exemple, en position déployée (figure 2), la paroi intérieure 27 de l'échangeur 25 reconstitue ladite surface de délimitation 41 radialement interne de la veine secondaire 11B. Dans ces conditions, la surface de délimitation 41 est formée par la surface externe 42 de la structure interne 21 de la nacelle 3 et par une surface interne 44 de la paroi intérieure 27 de l'échangeur 25.

La surface externe 42 de la structure interne 21 de la nacelle 3 et la surface interne 44 de la paroi intérieure 27 sont affleurantes, réduisant ainsi les pertes de charge singulières lorsque l'échangeur 25 est en position déployée.

Dans cet exemple, le capot extérieur 26, la paroi intérieure 27 et le module de transfert 28 forment des parties mobiles solidaires les unes des autres et déplacées en bloc lors du changement de position de l'échangeur 25.

A cet égard, les tuyaux flexibles de l'organe de raccordement permettent de préserver une liaison étanche entre les circuits de circulation et de lubrification.

La trajectoire du déplacement des parties mobiles de l'échangeur 25 est dans cet exemple linéaire et consiste en une translation radiale. Dans d'autres modes de réalisation non représentés, cette trajectoire peut être courbe et/ou comprendre une ou plusieurs phases incluant une translation radiale et/ou une translation axiale et/ou une combinaison de translations axiale et radiale.

Dans cet exemple, l'ensemble propulsif 1 comprend par ailleurs un organe (non représenté) de détection de la température du fluide caloporteur circulant dans le circuit de lubrification ainsi qu'un module de commande (non représenté) relié d'une part à cet organe de détection et d'autre part à l'actionneur de manière à modifier la position de l'échangeur 25 en fonction de cette température.

Typiquement, si la température dépasse un seuil prédéterminé, l'échangeur 25 est placé ou maintenu en position déployée et il est placé ou maintenu en position rétractée dans le cas contraire.

D'autres paramètres peuvent être utilisés pour piloter la position de l'échangeur 25, par exemple un paramètre représentatif de la phase de vol ou encore un débit du flux secondaire 10B.

Dans cet exemple, le capot extérieur 26 et la paroi intérieure 27 de l'échangeur 25 présentent chacun une double courbure, dans un plan longitudinal médian passant par l'échangeur 25.

La géométrie du capot extérieur 26 et de paroi intérieure 27 de l'échangeur 25 peuvent présenter toute autre géométrie en fonction par exemple de la position axiale à laquelle est placé l'échangeur 25 par rapport aux autres parties de la nacelle 3.

Le capot extérieur 26 et la paroi intérieure 27 de l'échangeur 25 sont dans cet exemple réalisés par fabrication additive, ce qui permet d'optimiser leur géométrie et de réduire les pertes de charge singulières.

La description qui précède s'applique par analogie au mode de réalisation des figures 3 et 4.

A la différence de l'exemple des figures 1 et 2, le capot extérieur 26 de l'échangeur 25, lorsque celui-ci est en position rétractée, ou sa paroi intérieure 27 lorsqu'il est en position déployée, reconstitue une surface de délimitation 51 radialement externe de la veine secondaire 11B.

En position rétractée (figure 3), cette surface de délimitation 51 est formée par une surface interne 52 de la structure externe 22 de la nacelle 3 et par une surface interne 53 du capot extérieur 26 de l'échangeur 25.

En position déployée (figure 4), cette surface de délimitation 51 est formée par la surface interne 52 de la structure externe 22 de la nacelle 3 et par une surface interne 54 de la paroi intérieure 27 de l'échangeur 25.

## Revendications

1. Nacelle (3) pour ensemble propulsif (1) d'aéronef à double flux, comprenant une structure interne (21), une structure externe (22) et un échangeur de chaleur (25), la structure interne (21) et la structure externe (22) délimitant radialement entre elles un conduit (11B) d'écoulement d'un premier fluide destiné à former un flux secondaire (10B), l'échangeur (25) comprenant un capot extérieur (26) et un module de transfert (28), le module de transfert (28) comportant un circuit de circulation d'un deuxième fluide, l'échangeur (25) étant relié à l'une parmi la structure interne (21) et la structure externe (22) de manière à pouvoir transmettre de la chaleur du deuxième fluide au premier fluide, cette nacelle (3) étant **caractérisée en ce qu'**elle comprend un actionneur configuré pour déplacer le capot extérieur (26) et le module de transfert (28) de l'échangeur (25) entre :
- une position rétractée dans laquelle le module de transfert (28) est reçu dans un logement (31) de la structure interne (21) ou externe (22) à laquelle l'échangeur (25) est relié et dans laquelle le capot extérieur (26) obture une ouverture de ce logement (31) de manière à reconstituer une surface de délimitation (41, 51) du conduit d'écoulement (11B),
- une position déployée dans laquelle le module de transfert (28) s'étend dans le conduit d'écoulement (11B) de manière à pouvoir être traversé par une fraction (10C) du flux secondaire (10B) et transmettre ainsi de la chaleur du deuxième fluide au premier fluide,
l'échangeur (25) comprenant une paroi intérieure (27), le module de transfert (28) s'étendant radialement entre la paroi intérieure (27) et le capot extérieur (26), la paroi intérieure (27) de l'échangeur (25) étant configurée pour obturer ladite ouverture du logement (31) de la structure interne (21) ou externe (22) à laquelle l'échangeur (25) est relié de manière à reconstituer ladite surface de délimitation (41, 51) du conduit d'écoulement (11B) lorsque l'échangeur (25) est en position déployée.

2. Nacelle (3) selon la revendication 1, dans laquelle l'actionneur est configuré pour déplacer le capot extérieur (26) et le module de transfert (28) de l'échangeur (25) entre la position rétractée et la position déployée par translation radiale.

3. Nacelle (3) selon la revendication 1 ou 2, dans laquelle le capot extérieur (26) de l'échangeur (25) comprend une surface (43, 53) présentant, dans un plan longitudinal médian, une courbure simple ou double.

4. Nacelle (3) selon l'une quelconque des revendications 1 à 3, dans laquelle l'échangeur (25) comprend un organe de raccordement du circuit de circulation du deuxième fluide, cet organe étant configuré pour raccorder ce circuit de circulation à un circuit de lubrification de l'ensemble propulsif (1).

5. Nacelle (3) selon l'une quelconque des revendications 1 à 4, comprenant un organe de détection et/ou d'évaluation d'au moins un paramètre tel que la température du deuxième fluide et un module de commande relié d'une part à cet organe et d'autre part à l'actionneur de manière à pouvoir déplacer le capot extérieur (26) et le module de transfert (28) en fonction de l'au moins un paramètre.

6. Ensemble propulsif (1) pour aéronef, cet ensemble propulsif (1) comprenant une nacelle (3) selon l'une quelconque des revendications 1 à 5.

7. Procédé de fabrication d'une nacelle (3) selon l'une quelconque des revendications 1 à 5, **caractérisé en ce qu'**il comprend une étape de fabrication additive du capot extérieur (26) de l'échangeur (25).

8. Procédé de fabrication d'une nacelle (3) selon l'une quelconque des revendications 1 à 5, **caractérisé en ce qu'**il comprend une étape de fabrication additive de la paroi intérieure (27) de l'échangeur (25).

## Patentansprüche

1. Gondel (3) für eine Zweistrom-Flugzeugantriebsanordnung (1), umfassend eine Innenstruktur (21), eine Außenstruktur (22) und einen Wärmetauscher (25), wobei die Innenstruktur (21) und die Außenstruktur (22) radial zwischen sich einen Strömungskanal (11B) für ein erstes Fluid begrenzen, das dazu bestimmt ist, einen Sekundärstrom (10B) zu bilden, wobei der Wärmetauscher (25) eine äußere Abdeckung (26) und ein Transfermodul (28) umfasst, wobei das Transfermodul (28) einen Zirkulationskreislauf für ein zweites Fluid enthält, wobei der Wärmetauscher (25) mit einer von der Innenstruktur (21) und der Außenstruktur (22) verbunden ist, um die Wärme vom zweiten Fluid auf das erste Fluid übertragen zu können, wobei die Gondel (3) **dadurch gekennzeichnet ist, dass** sie einen Aktuator umfasst, der dazu konfiguriert ist, die äußere Abdeckung (26) und das Transfermodul (28) des Wärmetauschers (25) zwischen Folgendem zu verschieben:
- einer eingefahrenen Position, in der das Transfermodul (28) in einer Aufnahme (31) der Innen- (21) oder der Außenstruktur (22) aufgenommen ist, mit der der Wärmetauscher (25) verbunden ist, und in der die äußere Abdeckung (26) eine Öffnung der Aufnahme (31) verschließt, um so eine Begrenzungsfläche (41, 51) des Strömungskanals (11B) wiederherzustellen,
- einer ausgefahrenen Position, in der sich das Transfermodul (28) in den Strömungskanal (11B) erstreckt, um von einem Teil (10C) des Sekundärstroms (10B) durchquert werden zu können und so die Wärme vom zweiten Fluid auf das erste Fluid zu übertragen,
wobei der Wärmetauscher (25) eine Innenwand (27) umfasst, wobei sich das Transfermodul (28) radial zwischen der Innenwand (27) und der äußeren Abdeckung (26) erstreckt, wobei die Innenwand (27) des Wärmetauschers (25) dazu konfiguriert ist, die Öffnung der Aufnahme (31) der Innen- (21) oder der Außenstruktur (22) zu verschließen, mit der der Wärmetauscher (25) verbunden ist, um so die Begrenzungsfläche (41, 51) des Strömungskanals (11B) wiederherzustellen, wenn sich der Wärmetauscher (25) in der ausgefahrenen Position befindet.

2. Gondel (3) nach Anspruch 1, wobei der Aktuator dazu konfiguriert ist, die äußere Abdeckung (26) und das Transfermodul (28) des Wärmetauschers (25) durch radiale Translation zwischen der eingefahrenen Position und der ausgefahrenen Position zu verschieben.

3. Gondel (3) nach Anspruch 1 oder 2, wobei die äußere Abdeckung (26) des Wärmetauschers (25) eine Oberfläche (43, 53) umfasst, die in einer mittleren Längsebene eine einfache oder doppelte Krümmung aufweist.

4. Gondel (3) nach einem der Ansprüche 1 bis 3, wobei der Wärmetauscher (25) ein Verbindungselement des Zirkulationskreislaufs für das zweite Fluid umfasst, wobei das Element dazu konfiguriert ist, den Zirkulationskreislauf mit einem Schmiermittelkreislauf der Antriebsanordnung (1) zu verbinden.

5. Gondel (3) nach einem der Ansprüche 1 bis 4, umfassend ein Erfassungs- oder ein Bewertungselement für mindestens einen Parameter wie der Temperatur des zweiten Fluids und ein Steuermodul, das einerseits mit dem Element und andererseits mit dem Aktuator verbunden ist, um in Abhängigkeit von dem mindestens einen Parameter die äußere Abdeckung (26) und das Transfermodul (28) verschieben zu können.

6. Antriebsanordnung (1) für ein Flugzeug, wobei die Antriebsanordnung (1) eine Gondel (3) nach einem der Ansprüche 1 bis 5 umfasst.

7. Verfahren zum Herstellen einer Gondel (3) nach einem der Ansprüche 1 bis 5, **dadurch gekennzeichnet, dass** es einen Schritt des additiven Fertigens der äußeren Abdeckung (26) des Wärmetauschers (25) umfasst.

8. Verfahren zum Herstellen einer Gondel (3) nach einem der Ansprüche 1 bis 5, **dadurch gekennzeichnet, dass** es einen Schritt des additiven Fertigens der Innenwand (27) des Wärmetauschers (25) umfasst.

## Claims

1. A nacelle (3) for a turbofan aircraft propulsion assembly (1), comprising an internal structure (21), an external structure (22) and a heat exchanger (25), the internal structure (21) and the external structure (22) delimiting radially therebetween a conduit (11B) for flowing a first fluid intended to form a secondary flow (10B), the heat exchanger (25) comprising an outer cowl (26) and a transfer module (28), the transfer module (28) including a circuit for circulating a second fluid, the heat exchanger (25) being connected to one of the internal structure (21) and the external structure (22) so as to be able to transmit heat from the second fluid to the first fluid, this nacelle (3) being **characterised in that** it comprises an actuator configured to displace the outer cowl (26) and the transfer module (28) of the heat exchanger (25) between:
- a retracted position in which the transfer module (28) is received in a housing (31) of the internal (21) or external (22) structure to which the heat exchanger (25) is connected and in which the outer cowl (26) seals an opening of this housing (31) so as to reconstitute a delimiting surface (41, 51) of the flow conduit (11B),
- a deployed position in which the transfer module (28) extends into the flow conduit (11B) so as to be able to be crossed by a fraction (10C) of the secondary flow (10B) and thus transmit heat from the second fluid to first fluid,
the heat exchanger (25) comprising an inner wall (27), the transfer module (28) extending radially between the inner wall (27) and the outer cowl (26), the inner wall (27) of the heat exchanger (25) being configured to seal said opening of the housing (31) of the internal (21) or external (22) structure to which the heat exchanger (25) is connected so as to reconstitute said delimiting surface (41, 51) of the flow conduit (11B) when the heat exchanger (25) is in the deployed position.

2. The nacelle (3) according to claim 1, wherein the actuator is configured to move the outer cowl (26) and the transfer module (28) of the heat exchanger (25) between the retracted position and the deployed position by radial translation.

3. The nacelle (3) according to claim 1 or 2, wherein the outer cowl (26) of the heat exchanger (25) comprises a surface (43, 53) having, in a median longitudinal plane, a single or double curvature.

4. The nacelle (3) according to any one of claims 1 to 3, wherein the heat exchanger (25) comprises a member for coupling the circuit for circulating the second fluid, this member being configured to couple this circulation circuit to a lubrication circuit of the propulsion assembly (1).

5. The nacelle (3) according to any one of claims 1 to 4, comprising a member for detecting and/or evaluating at least one parameter such as the temperature of the second fluid and a control module connected, on the one hand, to this member and, on the other hand, to the actuator so as to be able to displace the outer cowl (26) and the transfer module (28) depending on the at least one parameter.

6. A propulsion assembly (1) for an aircraft, this propulsion assembly (1) comprising a nacelle (3) according to any one of claims 1 to 5.

7. A method for manufacturing a nacelle (3) according to any one of claims 1 to 5, **characterised in that** it comprises a step of additive manufacturing of the outer cowl (26) of the heat exchanger (25).

8. The method for manufacturing a nacelle (3) according to any one of claims 1 to 5, **characterised in that** it comprises a step of additive manufacturing of the inner wall (27) of the heat exchanger (25).
